# EUROPEAN PATENT APPLICATION

(11) **EP 4 790 605 A1**
(43) Date of publication of application: **12.08.2026**
(21) Application number: 25157197.2
(22) Date of filing: 11.02.2025
(51) Int. Cl.: G06N 20/00

(54) **MACHINE LEARNING SYSTEM AND COMPUTER-IMPLEMENTED METHOD FOR MACHINE LEARNING SYSTEM FOR GROUPED FLOW SAMPLING**

(71) Applicant: Huawei Technologies Co., Ltd., Shenzhen, Guangdong 518129 (CN)
(72) Inventor: Navarro Gonzalez, Jose Manuel, 80992 Munich (DE); Krolikowski, Jonatan, 80992 Munich (DE); Alessandro, Finamore, 80992 Munich (DE); Bao, Xiaosheng, 80992 Munich (DE); Jiang, Zihan, 80992 Munich (DE); Yan, Zishuo, 80992 Munich (DE); Wang, Mowei, 80992 Munich (DE); Rossi, Dario, 80992 Munich (DE)
(74) Representative: Goddar, Heinz J.

(57) **Abstract**

A Machine Learning system comprising at least one memory device and at least one processor to determine whether machine learning model should be retrained or not, if so on what data machine learning model should be retrained on, by obtaining set of current class behaviour data, with N being number of classes, set of current class behaviour data being of first size (s), determining current data performance, obtaining set of new class behaviour data of second size (s'), obtaining storage constraint (S), generating retraining set, by selecting class behaviour data, and by optimising performance under storage constraint and grouped instance selection, determining retrained data performance for surrogate machine learning model, and determining mixed data performance, comparing mixed data performance, retrained data performance and/or current data performance to performance degradation target, and if performance degradation target is met, machine learning model should be retrained on retraining set of class behaviour data.

## Description

### TECHNICAL FIELD

The present disclosure relates generally to the field of data communication networks, more specifically, to a machine learning system and a method for the machine learning system for grouped flow sampling.

### BACKGROUND

In data communication networks, traffic data management is required for operational tasks, such as traffic classification, Quality of Service (QoS) management, content filtering, and ensuring secure network operations. Traffic data management helps maintain high network performance, optimize resource utilization, and improve overall network reliability. However, traffic classification relies on Machine Learning (ML) systems, which require frequent updates to adapt to changing traffic patterns in data communication networks. The updates involve collecting and storing large volumes of labelled data, such as Packet Capture (PCAP) files and similar artefacts for retraining. The process leads to increased storage costs, added complexity, and data management challenges, particularly concerning PCAP files. As traffic classification models are commonly trained on flows, but flows are stored as groups in PCAP files, under storage limitations, selecting which PCAP files to keep maximizing performance is a non-trivial task.

Certain attempts have been made to manage network traffic data effectively, such as data sampling techniques to reduce the size of training datasets, data drift detection mechanisms, and similar approaches. However, conventional ML systems face several limitations, including a lack of maximum storage constraints, leading to inefficient storage usage, neglect of grouped data selection, failure to distinguish between old and new data, frequent retraining requirements, and the like. Thus, there exists a technical problem of how to retrain a machine learning model.

Therefore, in light of the foregoing discussion, there exists a need to overcome the aforementioned drawbacks associated with the conventional machine learning systems and the conventional methods for machine learning systems.

### SUMMARY

The present disclosure provides a machine learning system and a computer-implemented method for the machine learning system grouped flow sampling. The present disclosure provides a solution to the existing problem of how to retrain a machine learning model while maintaining the efficiency and accuracy of the machine learning model under storage constraints. An objective of the present disclosure is to provide a solution that overcomes at least partially the problems encountered in the prior art and provides the machine learning system and the computer-implemented method for the machine learning system.

One or more objectives of the present disclosure are achieved by the solutions provided in the enclosed independent claims. Advantageous implementations of the present disclosure are further defined in the dependent claims.

In one aspect, the present disclosure provides the machine learning system that includes at least one processor and at least one memory device storing instructions that, when executed, configure the at least one processor to determine whether a machine learning model should be retrained and if so, on what data the machine learning model should be retrained on. Moreover, the at least one processor is configured to determine whether the machine learning model should be retrained by obtaining a set of current class behaviour data, with N being the number of classes to be modelled on which the machine learning model has been trained, the set of current class behaviour data being of a first size (s). Further, determining a current data performance for the machine learning model based on the set of current class behaviour data and obtaining a set of new class behaviour data, the set of new class behaviour data being of a second size (s'), obtaining a storage constraint (S). Additionally, generating a retraining set of class behaviour data, or a representative subset of it, by selecting class behaviour data from the set of current class behaviour data and the set of new class behaviour data by optimizing the performance of the machine learning model under the storage constraint and grouped instance selection. Moreover, determining a retrained data performance for a surrogate machine learning model trained on the retraining set of class behaviour data, and determining a mixed data performance for the machine learning model based on the set of new class behaviour data and the set of current class behaviour data, and comparing the mixed data performance, the retrained data performance and/or the current data performance to a performance degradation target, and if the performance degradation target is met, the machine learning model should be retrained on the retraining set of class behaviour data.

Advantageously, the machine learning system is configured to retrain the machine learning model by assessing the need for retraining and selecting optimal training data while adhering to storage constraints to maintain model accuracy. The machine learning system evaluates both current class behaviour data and new class behaviour data to generate a retraining dataset that balances overall performance across old and new data. Moreover, the machine learning system maintains accuracy without excessive data storage usage or frequent retraining. The machine learning system also preserves the logical integrity of data while improving the ability of the machine learning model to generalize across diverse traffic patterns. Additionally, the machine learning system reduces retraining and minimizes overall computational overhead, optimizing resource utilization, particularly in dynamically changing network environments.

In another aspect, the present disclosure provides a computer-implemented method for a machine learning system, that includes determining whether a machine learning model should be retrained and if so, on what data the machine learning model should be retrained on. Moreover, the computer-implemented method for the machine learning system includes determining whether the machine learning model should be retrained by obtaining a set of current class behaviour data on which the machine learning model has been trained on. Furthermore, the set of current class behaviour data being of a first size (s), determining a current data performance for the machine learning model based on the set of current class behaviour data, and obtaining a set of new class behaviour data. The set of new class behaviour data is of a second size (s'), obtaining a storage constraint (S). Furthermore, the method generating a retraining set of class behaviour data, or a representative subset of it, by selecting class behaviour data from the set of current class behaviour data and the set of new class behaviour data by optimising the performance of the machine learning model under the storage constraint and grouped instance selection. Additionally, the method determining a retrained data performance for a surrogate machine learning model trained on the retraining set of class behaviour data, and determining a mixed data performance for the machine learning model based on the set of new class behaviour data and the set of current class behaviour data, comparing the mixed data performance, the retrained data performance and/or the current data performance to a performance degradation target, and if the performance degradation target is met, the machine learning model should be retrained on the retraining set of class behaviour data.

The method achieves all the advantages and technical effects of the machine learning system of the present disclosure.

It is to be appreciated that all the aforementioned implementation forms can be combined.

It has to be noted that all devices, elements, circuitry, units, and means described in the present application could be implemented in the software or hardware elements or any kind of combination thereof. All steps which are performed by the various entities described in the present application, as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity that performs that specific step or functionality, it should be clear for a skilled person that these methods and functionalities can be implemented in respective software or hardware elements or any kind of combination thereof. It will be appreciated that features of the present disclosure are susceptible to being combined in various combinations without departing from the scope of the present disclosure as defined by the appended claims.

Additional aspects, advantages, features, and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
Embodiments of the present disclosure will now be described, by way of example only, with reference to the following diagrams wherein:
FIG. 1 is a block diagram of a machine learning system configured to provide traffic classification and model retraining decisions, in accordance with an embodiment of the present disclosure;
FIG. 2 is a flowchart of a computer-implemented method for a machine learning system for retraining of the machine learning model, in accordance with an embodiment of the present disclosure;
FIG. 3 is a diagram that depicts a selection of datasets for retraining a machine learning model in a machine learning system, in accordance with an embodiment of the present disclosure;
FIG. 4 is a diagram that illustrates the retraining the machine learning model in the machine learning system, in accordance with an embodiment of the present disclosure; and
FIG. 5 is a diagram that illustrates a flowchart for the method of the machine learning system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

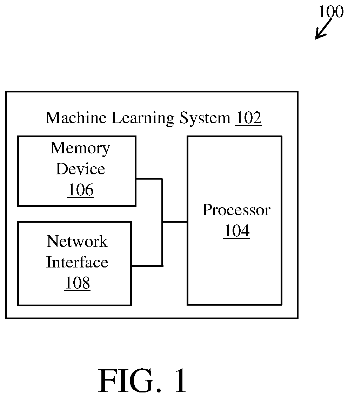

FIG. 1 is a block diagram of a machine learning system configured to take machine learning model retraining decisions, in accordance with an embodiment of the present disclosure. With reference to FIG. 1, there is shown a block diagram **100** of a machine learning system **102** that includes at least one processor **104**, at least one memory device **106**, and a network interface **108**.

The at least one processor **104** is configured to determine whether the machine learning model is required to be retrained or not. Examples of the at least one processor **104** include a microprocessor, a microcontroller, an application-specific integrated circuit (ASIC), or other computing units capable of handling complex data processing tasks and optimization algorithms. In an implementation, the one or more processors can be used to determine whether the machine learning model is required to be retrained or not.

The at least one memory device **106** is configured to store instructions received from the at least one processor **104**. Examples of implementation of the at least one memory device **106** may include, but are not limited to, Electrically Erasable Programmable Read-Only Memory (EEPROM), Dynamic Random Access Memory (DRAM), Random Access Memory (RAM), Read-Only Memory (ROM), Hard Disk Drive (HDD), Flash memory, a Secure Digital (SD) card, Solid-State Drive (SSD), and/or CPU cache memory.

The network interface **108** is used to communicate with the at least one memory device **106** and the at least one processor **104**. Moreover, examples of implementation of the network interface **108** may include but are not limited to a network interface, a computer port, a network socket, a network interface controller (NIC), and any other network interface device.

In operation, the at least one processor **104** is configured to determine whether the machine learning model should be retrained, and if so, on what data the machine learning model should be retrained on. Firstly, the at least one processor **104** determines whether the retraining of the machine learning model is required to be retrained or not. Secondly, the at least one processor **104** determines the dataset for retraining when the retraining of the machine learning model is required. As a result, the machine learning system **102** is configured to determine not just when to retrain but also what data is to be utilized while retraining the machine learning model.

Furthermore, the at least one processor **104** is configured to determine whether the machine learning model should be retrained by obtaining a set of current class behaviour data, with N being the number of classes to be modelled on which the machine learning model has been trained on, the set of current class behaviour data being of a first size (s). The set of current class behavior data represents the behavioural patterns and characteristics of the modelled classes, which were used to train the machine learning model. The at least one processor **104** evaluates the behavioral patterns and characteristics of the obtained set of current class behaviour data in order to ensure that the machine learning model is trained accurately and reliably.

Furthermore, the at least one processor **104** is configured to determine whether the machine learning model should be retrained by determining a current data performance for the machine learning model based on the set of current class behaviour data and obtaining a set of new class behaviour data, the set of new class behaviour data being of a second size (s'). The at least one processor **104** is configured to consider whether the machine learning model needs to be retrained or not. The at least one processor **104** evaluates the current performance of the machine learning model based on the set of current class behaviour data. Once new class behaviour data is available, which is of a second size (s'), thereafter, the at least one processor **104** is configured to evaluate the new data alongside the current data. Moreover, the size (s') of the new data represents the volume of additional information gathered, which may introduce variations from the original set in terms of scope or class behaviour. The at least one processor **104** compares the performance of the machine learning model trained on the current class behaviour data with the performance of the machine learning model when incorporating both the current data and the new data.

Furthermore, the at least one processor **104** is configured to determine whether the machine learning model should be retrained by obtaining a storage constraint (S) and generating a retraining set of class behaviour data, or a representative subset of it, by selecting class behaviour data from the set of current class behaviour data and the set of new class behaviour data by optimising the performance of the machine learning model under the storage constraint and grouped instance selection. The at least one processor **104** is configured to determine whether the machine learning model should be retrained by first obtaining a storage constraint (S), which specifies the maximum allowable storage size for the class behaviour data to be used in retraining. The at least one processor **104** then generates a retraining dataset or a representative subset of it by selecting the class behaviour data from both the current class behaviour data and the new class behaviour data. The selection process is performed by optimizing the performance of the machine learning model while adhering to storage constraints. As a result, by optimising the performance of the machine learning model under the storage constraint and grouped instance selection, the at least one processor **104** is configured to ensure the retraining of the machine learning model accurately and efficiently.

Furthermore, the at least one processor **104** is configured to determine whether the machine learning model should be retrained by determining a retrained data performance for a surrogate machine learning model trained on the retraining set of class behaviour data and determining a mixed data performance for the machine learning model based on the set of new class behaviour data and the set of current class behaviour data. In other words, the at least one processor **104** is configured to determine whether the machine learning model should be retrained by first determining the performance of a surrogate machine learning model trained on the retraining set of class behaviour data. Moreover, the retraining set is generated by selecting a representative subset of class behaviour data from both the current class behaviour data and the new class behaviour data thereby ensuring that the selected data adheres to the storage constraint (S). Thereafter, the at least one processor **104** compares the performance of the surrogate machine learning model on the retraining dataset with the performance of the machine learning model, which is determined by using the mixed data composed of both the current class behaviour data and the new class behaviour data. By determining the performance of the surrogate model on the retraining set and the performance of the machine learning model on the mixed data, the at least one processor **104** assesses whether retraining is required for the machine learning model based on the performance comparison.

Furthermore, the at least one processor **104** is configured to determine whether the machine learning model should be retrained by comparing the mixed data performance, the retrained data performance, and/or the current data performance to a performance degradation target, and if the performance degradation target is met, the machine learning model should be retrained on the retraining set of class behaviour data. The at least one processor **104** in the machine learning system **102** is configured to determine whether the machine learning model should be retrained by comparing the mixed data performance, the retrained data performance, and/or current data performance against a predefined performance degradation target. By comparing the performance against a performance degradation target, the machine learning system **102** ensures that retraining is initiated only when required, preventing the use of resources while maintaining the machine learning model to handle new and evolving data patterns. The at least one processor **104** compares the mixed data performance, the retrained data performance, and the current data performance to the performance degradation target. The comparison includes computing statistical intervals for evaluating performance differences between the current model and the surrogate model against defined thresholds, providing a quantifiable measure of certainty in the decision-making process about retraining. If the performance degradation target is met through the comprehensive evaluation, the machine learning model is retrained using the optimally selected retraining set of class behaviour data.

In accordance with an embodiment, the machine learning system **102** includes the at least one processor **104** that is further configured to compare the mixed performance, the new performance, and/or the current performance to a performance degradation target by determining the mixed data performance for the machine model and for the surrogate model noting a difference in mixed performance, determining the new data performance for the machine learning model and for the surrogate model noting a difference in new data performance, determining the current data performance for the machine learning model and for the surrogate model noting a difference in current data performance, and determining if any of the differences in performance meets one or more local targets, and if so determine that the performance degradation target is met. The at least one processor **104** is configured to determine a comprehensive performance evaluation by calculating and comparing the performance of the machine learning model and the surrogate model across multiple evaluation scenarios. The at least one processor **104** evaluates performance on combined datasets (i.e., containing both current and new class behaviour data), newly introduced data, and existing data separately. Through the comparisons, the machine learning system **102** evaluates performance differences against predefined degradation targets and local thresholds. When performance differences exceed the predefined degradation targets, indicating that the machine learning model is no longer operating efficiently with the mixed data, the at least one processor **104** determines that retraining is required.

In accordance with an embodiment, the machine learning system **102** includes a first local target that is an average of the difference in mixed performance, the difference in new performance, and the difference in current performance that falls below an average degradation threshold value. The at least one processor **104** is configured to determine the first local target for assessing the machine learning model stability. The at least one processor **104** calculates the differences between the mixed data performance, the new data performance, and the current data performance for both the machine learning model and the surrogate model. The differences are averaged to obtain a single performance deviation metric. The at least one processor **104** then compares the average deviation against the predefined degradation threshold value, ensuring that the machine learning model performance does not degrade beyond acceptable limits. If the computed average difference remains below the threshold, the machine learning system **102** determines that the performance is stable under changing data conditions.

In accordance with an embodiment, the machine learning system **102** includes a second local target that is any of the difference in mixed performance, the difference in new performance, and the difference in current performance falls below a first degradation threshold value. The at least one processor **104** is configured to determine the performance differences for each metric and then performs an independent evaluation to detect any instance where the difference in performance falls below the defined threshold. The machine learning system **102** identifies when any of the differences break the first degradation threshold, thus meeting the second local target. The at least one processor **104** carries out separate evaluations for mixed, new, and current performance differences. If any single performance difference meets the threshold condition, the machine learning system **102** flags the issue and incorporates it into the overall performance degradation. The second local target extends the machine learning system **102** to detect sensitive performance shifts, ensuring that even minor degradations are addressed before impacting overall machine learning model reliability.

In accordance with an embodiment the machine learning system **102** having a third local target is that any of the mixed performance, the new performance, and the current performance falls below a second degradation threshold value. In an implementation, the machine learning system **102** is configured to determine the third local target that evaluates the absolute performance against the second degradation threshold value. The at least one processor **104** determines the absolute performance values for each metric and then performs a direct numerical comparison against the second degradation threshold value. The machine learning system **102** identifies that the new performance falls below the threshold, thus meeting the third local target. The at least one processor **104** maintains separate evaluation threads for each performance metric to enable parallel processing and faster detection of the performance degradation. When any single performance metric falls below the threshold, the at least one processor **104** immediately flags the condition and causes the overall performance degradation target evaluation. The third local target provides to the machine learning system **102** absolute performance assurance through direct metric monitoring and early detection of performance degradation.

In accordance with an embodiment, the at least one processor **104** is further configured to optimize the performance of the machine learning model under the storage constraint based on surrogate evaluation utilizing statistical significance testing. The at least one processor **104** generates multiple surrogate models by training the surrogate model on different subsets of the combined data that respect the storage constraint S. Once the surrogate models are trained, the at least one processor **104** performs statistical testing on each of the surrogate model to compare the performance of the machine learning model with that of the surrogate models. The at least one processor **104** then evaluates the significance of performance improvements, adjusting the data selection to preferentially choose data combinations that lead to statistically significant performance improvements. If the performance differences pass the statistical test, the data combination is selected for further evaluation, ensuring that only valid improvements are considered. By optimizing the selection process, the at least one processor **104** ensures computational efficiency while maintaining the results, thus optimizing the machine learning model without exceeding the storage constraint.

In accordance with an embodiment, the at least one processor **104** is further configured to cause the machine learning model to be retrained based on the retraining set of class behaviour data by transmitting the retraining set of class behaviour data to a training device. The machine learning system **102** is configured for retraining where the at least one processor **104** initiates the machine learning model retraining process by transmitting the optimized retraining set of class behaviour data to a training device. The at least one processor **104** packages the optimized retraining set of class behaviour data, maintaining the integrity of grouped flows within PCAP files. Then, the at least one processor **104** establishes a secure connection with the training device and initiates the data transmission process. The at least one processor **104** begins the machine learning model retraining process while the machine learning system **102** continues the classification operations using the current machine learning model until the updated machine learning model is ready for positioning.

In accordance with an embodiment, when the performance degradation target is not met, the at least one processor **104** is further configured to discard the set of new class behaviour data. The at least one processor **104** is configured to discard the set of new class behaviour data when the performance degradation target is not met. The set of new class behaviour data is discarded after the machine learning system **102** determines that neither the mixed data performance, retrained data performance, nor current data performance comparisons do not indicate performance degradation to the machine learning model retraining. The discarded data prevents the accumulation of not-required network traffic data that does not improve the machine learning model performance. The at least one processor **104** confirms that all performance determinations have been completed, and the performance degradation target has not been met.

In accordance with an embodiment, the at least one processor **104** is further configured to discard a portion of the set of new class behaviour data, wherein the oldest class behaviour data in the new set of class behaviour data is discarded. The at least one processor **104** identifies the relative age of the data entries within the new set of class behaviours and determines the oldest data for removal. By discarding the oldest data, the machine learning system **102** optimizes available storage and computational resources, ensuring that the machine learning model operates with the most current and relevant data. The process helps to maintain the machine learning model accuracy while adhering to storage constraints, allowing for a more efficient machine learning model retraining process. The removal of outdated data also ensures that the machine learning model remains focused on the most recent trends and patterns, which is particularly required in environments where class behaviour changes over time.

In accordance with an embodiment, the at least one processor **104** is further configured to determine the mixed data performance for the machine learning model by estimating the new performance utilizing a surrogate model based on the set of new class behaviour data and the set of current class behaviour data. The at least one processor **104** creates a combined dataset from the new and current class behaviour data, which is then processed by the surrogate model, which is configured to be less complex than the machine learning model. The surrogate model evaluates the combined dataset by analyzing and extracting relevant features and computing performance for both the new and current data. By processing the data with a computationally efficient surrogate model, the machine learning system **102** can estimate the mixed data performance without requiring a full evaluation using the primary machine learning model, which would require more resources and time. The at least one processor **104** enables a faster performance assessment while maintaining sufficient accuracy for decision-making. The at least one processor **104** then uses the estimated performance to determine whether the machine learning model requires retraining and adjustment, optimizing the machine learning model while minimizing computational overhead.

In accordance with an embodiment, the at least one processor **104** is further configured to determine the current data performance for the machine learning model by estimating the current performance utilizing a surrogate model based on the set of new class behaviour data. The at least one processor **104** pre-processes the new class behaviour data by analyzing the extracting relevant features, such as network traffic patterns or flow characteristics. The processed data is then fed into the surrogate model, which is the retrained version of the machine learning model configured to improve the overall performance of the machine learning model with reduced resource utilization. The surrogate model uses statistical methods or approximations to predict the performance of the machine learning model on the new data. The current performance is estimated to avoid the overall computational cost of a full evaluation. The results are then used to decide if further training or adjustments are needed or not to improve the accuracy of the machine learning model.

In accordance with an embodiment, the at least one processor **104** is further configured to determine the current data performance for the machine learning model based on the set of current class behaviour data by storing performance data during execution and retrieving the stored performance data. The at least one processor **104** determines the current data performance by utilizing stored performance computed during the machine learning model execution. The storing data in the machine learning system **102** maintains a record of performance data associated with the set of current class behaviour data, enabling recovery of performance without the need for recomputation. The performance data storage and recovery eliminates the computational overhead of repeatedly evaluating the machine learning model performance on the current class behaviour data. When the machine learning model processes the current class behaviour data, the at least one processor **104** computes comprehensive performance and stores all the datasets in the at least one memory device **106**. The storage includes recording the performance data along with relevant data information. During subsequent performance evaluations, the at least one processor **104** retrieves the stored data through the at least one memory device **106** access, ensuring rapid availability of current performance data.

In accordance with an embodiment, the first size (s) is less than or equal to the storage constraint (S, s<=S). The storage constraint validation maintains the machine learning system **102** stability and prevents resource overflow. The storage constraint is used to maintain the overall performance of the machine learning system **102** while preventing excessive data accumulation that could impact the operational efficiency of the machine learning model. The at least one processor **104** maintains a running calculation of the total size of current class behaviour data by tracking the size of each PCAP file in the dataset. When new data is added to the current class behaviour dataset, the at least one processor **104** computes the cumulative size and compares the same against the storage constraint S. In an implementation, the first size (s) is equal to the storage constraint (S), meaning the current class behaviour data utilizes the maximum allowed storage capacity. In another implementation, the first size (s) is less than the storage constraint (S), where the machine learning system **102** operates with some free storage space available for future data addition. The storage constraint validation ensures efficient resource utilization by preventing storage overflow conditions that could impact the machine learning system **102** performance.

In accordance with an embodiment, the second size (s') is less than or equal to the storage constraint (S, s'<=S). In an implementation, the second size (s') is equal to the storage constraint (S), meaning the new class behaviour data occupies the entire allocated storage capacity. In another implementation, the second size (s') is less than the storage constraint (S), where the machine learning system **102** leaves some available space for future data intake. The storage constraint helps maintain the machine learning system **102** optimal performance by preventing excessive data accumulation that could impact the machine learning model operational efficiency during the performance assessment. When new data is being received, the at least one processor **104** computes the cumulative size and compares the same against the storage constraint S. If the incoming data may cause the size to exceed S, the at least one processor **104** implements data management procedures to maintain compliance with the storage constraint through selective data insertion. The storage constraint validation ensures efficient resource utilization by preventing storage overflow conditions that could impact the machine learning system **102** performance during the evaluation.

In accordance with an embodiment, the machine learning model is configured to be utilized as a traffic classification model that assigns a class label to a traffic flow based on the traffic flow's traffic characteristics. The machine learning system **102** is configured for traffic classification where the machine learning model functions as the traffic classifier that processes network traffic flows and assigns appropriate class labels based on the traffic characteristics. The traffic classification analyzes various attributes and patterns within network traffic flows to categorize them into predefined classes. The traffic flows must be processed and selected at the experiment level rather than the individual flow level, maintaining the grouping of the data as captured in PCAP files. When a traffic flow is received, the at least one processor **104** extracts relevant characteristics from the PCAP files, such as packet sizes, inter-arrival times, protocol information, and flow statistics. The characteristics are then processed through the machine learning model, which applies the machine learning model trained parameters to analyze the traffic patterns. The machine learning model evaluates the characteristics against learned patterns to determine the class label for the traffic flow. The traffic classification model enables automated and accurate identification of different types of network traffic without manual intervention, improving network management efficiency.

In accordance with an embodiment, the class behavior data is comprised in a PCAP file. The PCAP file format is a standardized container for storing network traffic data and capturing detailed packet-level information including headers, payloads, timestamps, and protocol-specific details of network communications. The at least one processor **104** processes the class behaviour data through direct interaction with PCAP files. When handling network traffic data, the at least one processor **104** reads the PCAP file structure, which contains packet headers, payload information, and timing data. The at least one processor **104** extracts relevant features from the PCAP files and maintains the integrity of traffic flow characteristics such as packet sizes, inter-arrival times, and protocol information. The use of PCAP files for storing class behavior data ensures the complete preservation of network traffic characteristics, enabling more accurate traffic classification through comprehensive feature analysis.

In an exemplary scenario, the dataset includes two traffic classification datasets, such as a first dataset (i.e., D_A) and a second dataset (i.e., D_B), each representing network traffic collected from different environments. Each dataset includes multiple Packet Capture (PCAP) files. The evaluation of each dataset involves training the machine learning model on old data (i.e., M_old) and comparing it with the machine learning model trained on MOOB-selected combined datasets (i.e., M_new). In an implementation, the MOOB (i.e., maximize out of bag) refers to a data selection algorithm that optimizes the retraining dataset by evaluating different subsets of PCAP files and selecting the combination that maximizes classification performance, such as by randomly selecting flows associated with a percentage of PCAP files per class in training data multiple times, evaluating the utilization of non-selected PCAP flows, and choosing the subset that in order to provide an improved overall performance of the machine learning system **102**.

Furthermore, each dataset is captured in different environments and corresponds to tabular data, where one row equals the size*direction of the first 30 packets of a flow. The number of flows and PCAPs per application in each of them is displayed in table 1 given below: -

**Table 1**

| Application | Flows in *D_{A}* | PCAPs in *D_{A}* | Flows in *D_{B}* | PCAPs in *D_{B}* |
|---|---|---|---|---|
| A | 2665 | 161 | 3200 | 180 |
| B | 836 | 109 | 4000 | 341 |
| C | 2435 | 81 | 12742 | 508 |
| D | 464 | 77 | 294 | 293 |
| E | 1273 | 28 | 2328 | 153 |
| F | 1889 | 28 | 0 | 0 |

In an implementation, the optimal data Group Selector (ODGS) is a selection mechanism configured to optimize training data by determining whether new data is incorporated or if existing data is sufficient for maintaining model performance. ODGS operates by evaluating different data selection strategies, utilizing MOOB, an algorithm that selects the effective subset of data based on classification performance. MOOB is used as the ODGS to compare ODGS with keeping the current data by splitting D_1 and D_2 into 50 subsets, using a 10-fold cross-validation scheme with 5 repetitions. Moreover, each split (i.e., *i*) includes an old training data (i.e., *T*_{1*i*}), new training data (i.e., *T*₂*i*), old validation data (i.e., *V*_{1*i*}), and a new validation data (i.e., *V*_{2*i*})*.* Each split is used to train a model with *T*_{1*i*}, *M_{old}* and MOOB(*T*₁*ᵢUT*_{2*i*}), *M_{new}* in order to evaluate *M_{old}* and *M_{new}* over *V*_{1*i*}, *V*_{2*i*} and *V*₁*ᵢUV*₂*ᵢ.* As a result, a performance distribution analysis of M_old and M_new is conducted under retraining conditions, and the retraining flag is raised if applicable.

For example, if the storage constraint is set to 484 PCAPs, representing approximately 25% of the total experiments, the expectation is that retraining will be required. As the datasets have been captured in different environments, the expectation of output is that retraining is needed, such as given in Table 2 given below: -

**Table 2**

| Model | F1@*D*_{1,2} | F1@*D*₁ | F1@*D*₂ |
|---|---|---|---|
| Old | 0.693 | 0.960 | 0.440 |
| Candidate | 0.950 | 0.936 | 0.972 |
| Difference | 0.257 | -0.024 | 0.532 |

Moreover, If the average decrease in performance exceeds 0.05 F1 score across {D_1,2, D_1, D_2} (0.259 > 0.05), retraining is required. Similarly, if any average F1 score in {*D*_{1,2}, *D*₁, *D*₂} decreases more than 0.1: {0.257, 0.532} > 0.1, then, in that case, retraining is required. Furthermore, if an average score {*D*_{1,2}, *D*₁, *D*₂} is < 0.9: {0.693, 0.440} < 0.9, then also the retraining is required. As a result, if at least one retraining condition is fulfilled, this would raise the retraining flag and MOOB would be applied to *D*₁*UD*₂ to the dataset with which to retrain and redeploy the model.

In another example, if the storage constraint is equal to half of the number of PCAPs in *D*₁: 282 experiments, half of the total number of the experiments. As the datasets are coming from the same environment, then, no retraining is expected, as shown in Table 3 below:

**Table 3**

| Model | F1@*D*_{1.2} | F1@*D*₁ | F1@*D*₂ |
|---|---|---|---|
| Old | 0.932 | 0.924 | 0.939 |
| Candidate | 0.962 | 0.960 | 0.963 |
| Difference | 0.030 | 0.036 | 0.024 |

Moreover, the total average difference between the candidate and the old model is 0.**030**. If an average decrease in performance is > 0.05 F1 score across {*D*_{1,2}, *D*₁, *D*₂}: 0.03 < 0.05, then, in that case, no retraining is required. Similarly, if the average decrease is less than 0.1 ({0.030, 0.036, 0.024} < 0.1) and all scores remain above 0.9 ({0.932, 0.924, 0.939} > 0.9), then no retraining is required.

Advantageously, the machine learning system **102** is configured to provide efficient traffic data management for training the machine learning model by assessing the need for retraining and selecting optimal training data while adhering to storage constraints to maintain model accuracy. The machine learning system **102** evaluates both current class behavior data and new class behavior data to generate a retraining dataset that balances overall performance across old and new data. Moreover, the machine learning system **102** maintains accuracy without excessive data storage usage or frequent retraining while preserving the logical integrity of data and improving the ability of the machine learning model to generalize across diverse traffic patterns. Additionally, the machine learning system **102** reduces unnecessary retraining efforts and minimizes overall computational overhead, optimizing resource utilization, particularly in dynamically changing network environments.

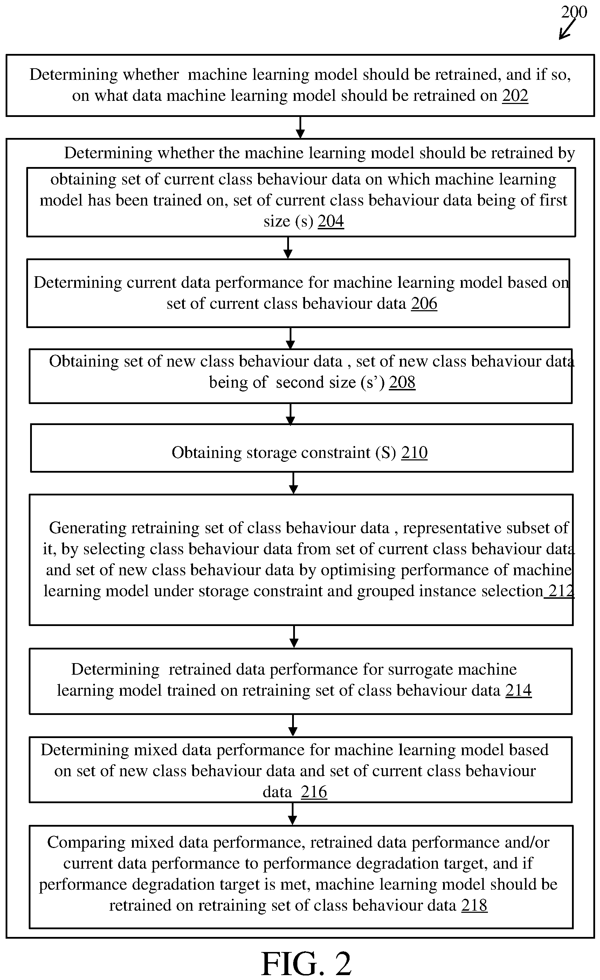

FIG. 2 is a flowchart of a computer-implemented method for a machine learning system for retraining the machine learning model, in accordance with an embodiment of the present disclosure. With reference to FIG. 2, there is shown a flowchart of a computer-implemented method **200** that includes steps **202**, and sub-steps **204** to **218**. The machine learning system (i.e., the machine learning system **102** of FIG. 1) is configured to execute the computer-implemented method **200**.

At step **202** the computer-implemented method **200** includes determining whether the machine learning model should be retrained or not and if so, on what data the machine learning model should be retrained on. In an implementation, the at least one processor **104** determines whether the machine learning model requires retraining or not, such as by analyzing the performance of the current machine learning model against predefined thresholds and then determining if the machine learning model requires retraining on what data the machine learning model should be retrained.

At sub-step **204**, the computer-implemented method **200** includes determining whether the machine learning model should be retrained by obtaining a set of current class behavior data on which the machine learning model has been trained on, set of current class behavior data being of a first size (s).

Furthermore, at sub-Step **206**, the computer-implemented method **200** includes determining whether the machine learning model should be retrained by determining current data performance for the machine learning model based on the set of current class behavior data. At sub-step **208**, the computer-implemented method **200** includes determining whether the machine learning model should be retrained by obtaining a set of new class behavior data, with the set of new class behavior data being of second size (s').

At sub-step **210**, the computer-implemented method **200** includes determining whether the machine learning model should be retrained by obtaining storage constraint (S). At sub-step **212**, the computer-implemented method **200** includes determining whether the machine learning model should be retrained by generating a retraining set of class behavior data by selecting class behavior data from the set of current class behavior data and the set of new class behavior data while optimizing the machine learning model performance under storage constraints and grouped instance selection.

Furthermore, at sub- step **214**, the computer-implemented method **200** includes determining whether the machine learning model should be retrained by determining retrained data performance for the surrogate machine learning model trained on the retraining set of class behaviour data. In an implementation, the at least one processor **104** is configured to determine the performance of the surrogate machine learning model, such as by evaluating the surrogate machine learning model on the retraining set of class behavior data, for example, by computing performance, such as accuracy, precision, recall, and F1-score thereby allowing the at least one processor **104** to assess at what extend the surrogate machine learning model performs after being trained on the selected retraining data. After that, at sub-step **216**, the computer-implemented method **200** includes determining whether the machine learning model should be retrained by determining mixed data performance for the machine learning model based on the set of new class behavior data and the set of current class behavior data and at sub-step **218**, the computer-implemented method **200** includes determining whether the machine learning model should be retrained by comparing mixed data performance, retrained data performance, and/or current data performance to the performance degradation target, and if the performance degradation target is met, the machine learning model should be retrained on the retraining set of class behavior data.

Advantageously, the computer-implemented method **200** illustrated enhances the machine learning model maintenance through systematic performance evaluation. Computer-implemented method **200** manages storage resources through storage constraints while storing grouped data through selective data management. The use of a surrogate model for performance evaluation reduces computational overhead by testing potential retraining benefits before evaluating the machine learning model updates. The computer-implemented method **200** includes performance degradation assessment for different types of data that enables precise detection of performance degradation while minimizing the retraining operations that are not required.

The steps **202** and sub-steps **204** to **218** are only illustrative, and other alternatives can also be provided where one or more steps are added, one or more steps are removed, or one or more steps are provided in a different sequence without departing from the scope of the claim herein.

There is further provided a computer program product comprising program instructions for performing the computer-implemented method **200** when executed by one or more processors in the communication system. The computer program product is implemented as an algorithm, embedded in a software stored in a non-transitory computer-readable storage medium. The non-transitory computer-readable storage means may include but are not limited to, an electronic storage device, a magnetic storage device, an optical storage device, an electromagnetic storage device, a semiconductor storage device, or any suitable combination of the foregoing. Examples of implementation of computer-readable storage medium, but are not limited to, Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), a computer-readable storage medium, and/or CPU cache memory.

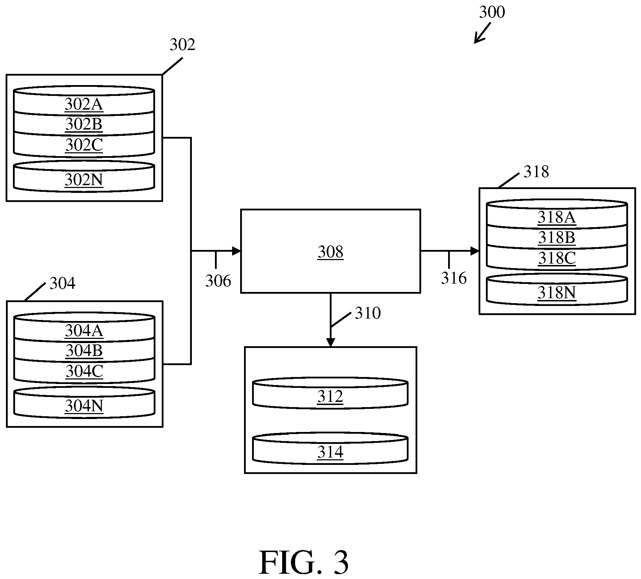

FIG. 3 is a diagram that depicts selection of dataset for retraining a machine learning model in a machine learning system, in accordance with an embodiment of the present disclosure. With reference to FIG.3, there is shown a diagram **300** that depicts the selection of the dataset for retraining the machine learning model in the machine learning system **102**.

In an implementation scenario, the machine learning system **102** is configured to perform data management operations. These operations involve processing the current class behavior data **302**, which contains PCAP files (i.e., the first PCAP file **302A**, the second PCAP file **302B**, the third PCAP file **302C**, and the nth PCAP file **302N**), and the newly collected data **304**, which also contains PCAP files (i.e., the first PCAP file **304A**, the second PCAP file **304B**, the third PCAP file **304C**, and the nth PCAP file **304N**) that are processed through an optimal data group selector **308**. The optimal data group selector **308** operates under a storage constraint **310** and processes the input data via operation **306**, which channels both current and new data into the selector. The machine learning system **102** further executes operation **316**, which directs less significant data to the discarded section, and operation **318**, which forwards the optimally selected PCAP files as output.

The optimal data group selector **308** analyzes both current and new behavior patterns to generate outputs. The output includes selected PCAP files from operation **318** (i.e., the first PCAP file **318A**, the second PCAP file **318B**, the third PCAP file **318C**, and the nth PCAP file **318N**), while discarded data, containing removed PCAP files, is processed via operation **316** and stored in operations **312** and **314**. The optimal data group selector **308** implements statistical evaluation to determine which PCAP files should be retained or discarded based on their significance to the performance of the machine learning model. In an implementation, the evaluation is performed through a Maximize Out of Bag performance (MOOB) algorithm. The MOOB algorithm first randomly selects flows associated with a percentage of PCAP files per class in the training data, followed by evaluating the data with flows from non-selected PCAP files. The MOOB algorithm then chooses the PCAP subset that demonstrates the best performance and validates the machine learning model trained with the selected samples. When new PCAP files are processed, the optimal data group selector **308** evaluates them against the storage constraint **310** and existing behavior patterns to maintain an optimal data distribution. If the evaluation indicates that certain PCAP files do not significantly contribute to the machine learning model performance, the corresponding files are moved to the discarded dataset via operation **316** and stored in operations **312** and **314**. Furthermore, the optimal data group selector **308** ensures that the data selection process considers both storage efficiency and performance impact. As a result, the machine learning system **102** is configured to optimize data retention while adhering to storage constraints. This approach enhances the machine learning model performance while efficiently managing the machine learning system **102** resources.

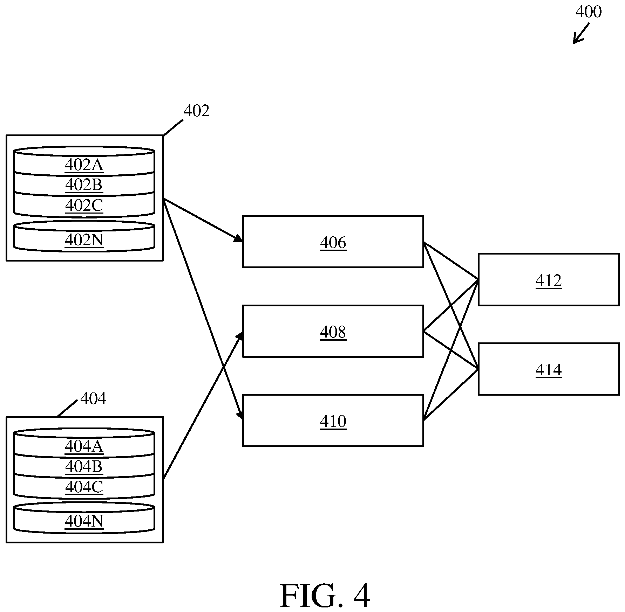

FIG. 4 is a diagram that illustrates the retraining of the machine learning model in the machine learning system **102**, in accordance with an embodiment of the present disclosure. With reference to FIG. 4, there is shown a diagram **400** that depicts an implementation scenario of the selection of the dataset and retraining of the machine learning model in the machine learning system **102**.

In an implementation scenario, the machine learning system **102** is configured to perform a parallel performance evaluation that processes data from two primary sources. Firstly, at operations **402** current class behavior data containing PCAP files (i.e., the first PCAP file **402A**, the second PCAP file **402B**, the third PCAP file **402C** and the nth PCAP file **402N**) and secondly, new class behaviour data store **404** containing PCAP files (i.e., the first PCAP file **404A**, the second PCAP file **404B**, the third PCAP file **404C** and the nth PCAP file **404N**). First, the performance on the current data module at operation **406** analyzes the machine learning model performance using only the current class behavior data from the data store at operation **402**. Second, the performance of the new data module at operation **408** assesses the machine learning model to which extent the machine learning model works with newly collected traffic patterns from data stored at new class behaviour data store **404**. Third, the performance on all data module **410** examines the machine learning model behavior on the combined dataset. Each module processes the respective PCAP files to generate a comprehensive performance assessment, aiding in the determination of whether model retraining is required or not.

The evaluation results from three parallel paths that are processed by two selection components, which involve explicit comparison of two distinct data selection strategies. The ODGS versus keeping the current data, where each strategy effectiveness is evaluated through comprehensive performance metrics. The optimal data group selector **412** and the current classes behavior data selector at operation **414**. The optimal data group selector **412** analyzes the performance from all three evaluation paths to determine the most effective combinations of current and new data for potential model retraining, while the current classes behavior data selector at operation **414** focuses on identifying and extracting relevant patterns from the existing data that helps in maintaining and improving the machine learning model performance assessment enables evaluation of the machine learning model behavior across different data combinations while ensuring optimal resource utilization under storage constraints. Advantageously, the parallel performance evaluation enables analysis of the machine learning model performance across different data combinations, reducing the computational overhead associated with sequential processing. The dual selection optimizes data selection, where the optimal data group selector processes performance from all evaluation paths while the current classes behavior data selector focuses on maintaining relevant patterns.

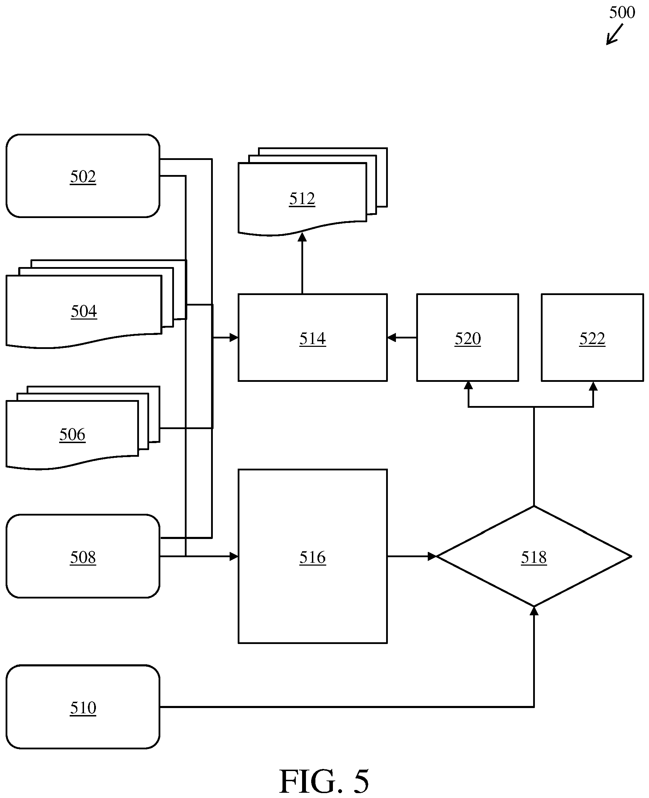

FIG. 5 is a diagram that illustrates a flowchart for the method of the machine learning system, in accordance with an embodiment of the present disclosure. With reference to FIG. 5, there is shown a diagram **500** that depicts a flowchart for the selection strategies (ODGS) by estimating the performance of traffic classification models trained with the output.

In an implementation scenario, at operation **502**, the optimal data group selector is configured to manage the entire data selection process, analyzing both current and new behavior patterns. It utilizes parallel processing paths to evaluate multiple data streams efficiently while maintaining continuous communication with data stores. Furthermore, operation **504**, the machine learning system **102** is configured to maintain the existing training data, organized into multiple PCAP files for quick access to traffic patterns, and ensures data integrity through redundancy mechanisms. At operation **506**, the newly collected data store is configured to serve as a buffer for newly acquired network traffic patterns for efficient storage while preserving the reliability of captured network behaviors. Thereafter, storage constraints impose limitations on data storage capacity and group organization, ensuring efficient utilization while maintaining data quality, such as at operation **508**. Constraints are dynamically adjusted based on system requirements. At operation **510**, the machine learning system **102** is configured to define precise thresholds for acceptable machine learning model performance. The machine learning system **102** is further configured to process data, such as at operation **512** that includes Aggregates behavior patterns from all data sources using advanced data integration algorithms. This ensures that all network traffic patterns are well-represented while preserving relationships between behavior classes. Furthermore, at operation **514**, the final data group selector is used to evaluate multiple combinations of current and new behavior patterns using advanced selection algorithms, such as by considering performance and storage constraints to determine the most effective training data subset. At operation **516**, the machine learning system **102** is configured to conduct statistical analysis of selected data subsets to assess significance and representativeness, assisting in the decision-making process for retraining and making a retraining decision based on a comprehensive performance analysis, such as at operation **518**. If retraining is required, then, in that case, at operation **520**, the machine learning system **102** is configured to trigger the machine learning model retraining and if retraining is not required, then, in that case, at operation **522**, data cleanup and management is performed by removing not required data while preserving patterns. Advantageously, the structured selection process enables efficient data aggregation, optimized storage utilization, and improved retraining decisions, ensuring that only the most relevant and representative data is used for the machine learning model updates while minimizing computational overhead.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A Machine Learning system (102) comprising at least one processor (104) and at least one memory device (106) storing instructions that, when executed, configure the at least one processor (104) to:
determine whether a machine learning model should be retrained, and if so, on what data the machine learning model should be retrained on, wherein the at least one processor (104) is configured to determine whether the machine learning model should be retrained by obtaining a set of current class behaviour data, with N being the number of classes to be modeled, on which the machine learning model has been trained on, the set of current class behaviour data being of a first size (s),
determining a current data performance for the machine learning model based on the set of current class behaviour data,
obtaining a set of new class behaviour data, the set of new class behaviour data being of a second size (s'),
obtaining a storage constraint (S),
generating a retraining set of class behaviour data, or a representative subset of it, by selecting class behaviour data from the set of current class behaviour data and the set of new class behaviour data by optimising the performance of the machine learning model under the storage constraint and grouped instance selection,
determining a retrained data performance for a surrogate machine learning model trained on the retraining set of class behaviour data, and
determining a mixed data performance for the machine learning model based on the set of new class behaviour data and the set of current class behaviour data,
comparing the mixed data performance, the retrained data performance and/or the current data performance to a performance degradation target, and if the performance degradation target is met, the machine learning model should be retrained on the retraining set of class behaviour data.

2. The machine learning system (102) according to claim 1, wherein the at least one processor (104) is further configured to
compare the mixed performance, the new performance and/or the current performance to a performance degradation target by,
determining the mixed data performance for the machine learning model and for the surrogate model noting a difference in mixed performance,
determining the new data performance for the machine learning model and for the surrogate model noting a difference in new data performance,
determining the current data performance for the machine learning model and for the surrogate model noting a difference in current data performance and determining if any of the differences in performance meets one or more local targets, and if so determine that the performance degradation target is met.

3. The machine learning system (102) according to claim 2, wherein a first local target is that an average of the difference in mixed performance, the difference in new performance and the difference in current performance falls below an average degradation threshold value.

4. The machine learning system (102) according to claim 2 or 3, wherein a second local target is that any of the difference in mixed performance, the difference in new performance and the difference in current performance falls below a first degradation threshold value.

5. The machine learning system (102) according to claim 2, 3 or 4, wherein a third local target is that any of the mixed performance, the new performance and the current performance falls below a second degradation threshold value.

6. The machine learning system (102) according to any preceding claim, wherein the at least one processor (104) is further configured to optimise the performance of the machine learning model under the storage constraint based on surrogate evaluation utilizing statistical significance testing.

7. The machine learning system (102) according to any preceding claim, wherein the at least one processor (104) is further configured to cause the machine learning model to be retrained based on the retraining set of class behaviour data by transmitting the retraining set of class behaviour data to a training device.

8. The machine learning system (102) according to any preceding claim, wherein, when the performance degradation target is not met, the at least one processor (104) is further configured to discard the set of new class behaviour data.

9. The machine learning system (102) according to claim 8, wherein the at least one processor (104) is further configured to discard a portion of the set of new class behaviour data, wherein the oldest class behaviour data in the new set of class behaviour data is discarded.

10. The machine learning system (102) according to any preceding claim, wherein the at least one processor (104) is further configured to determine the mixed data performance for the machine learning model by estimating the new performance utilizing a surrogate model based on the set of new class behaviour data and the set of current class behaviour data.

11. The machine learning system (102) according to any preceding claim, wherein the at least one processor (104) is further configured to determine the current data performance for the machine learning model by estimating the current performance utilizing a surrogate model based on the set of new class behaviour data.

12. The machine learning system (102) according to any of claims 1 to 10, wherein the at least one processor (104) is further configured to determine the current data performance for the machine learning model based on the set of current class behaviour data by storing performance data during execution and retrieving the stored performance data.

13. The machine learning system (102) according to any preceding claim, wherein the first size (s) is less than or equal to the storage constraint (S, s<=S).

14. The machine learning system (102) according to any preceding claim, wherein the second size (s') is less than or equal to the storage constraint (S, s'<=S).

15. The machine learning system (102) according to any preceding claim, wherein the machine learning model is configured to be utilized as a traffic classification model that assigns a class label to a traffic flow based on the traffic flow's traffic characteristics.

16. The machine learning system (102) according to any preceding claim, wherein the class behaviour data is comprised in a PCAP file.

17. A computer-implemented method (200) for a machine learning system (102) , the method comprising:
determining whether a machine learning model should be retrained, and if so, on what data the machine learning model should be retrained on, wherein the method comprises determining whether the machine learning model should be retrained by,
obtaining a set of current class behaviour data on which the machine learning model has been trained on, the set of current class behaviour data being of a first size (s),
determining a current data performance for the machine learning model based on the set of current class behaviour data,
obtaining a set of new class behaviour data, the set of new class behaviour data being of a second size (s'),
obtaining a storage constraint (S),
generating a retraining set of class behaviour data, or a representative subset of it, by selecting class behaviour data from the set of current class behaviour data and the set of new class behaviour data by optimising the performance of the machine learning model under the storage constraint and grouped instance selection,
determining a retrained data performance for a surrogate machine learning model trained on the retraining set of class behaviour data, and
determining a mixed data performance for the machine learning model based on the set of new class behaviour data and the set of current class behaviour data,
comparing the mixed data performance, the retrained data performance, and/or the current data performance to a performance degradation target, and if the performance degradation target is met, the machine learning model should be retrained on the retraining set of class behaviour data.

18. A computer program product comprising program instructions for performing the method according to claim 17, when executed by one or more processors in a machine learning system (102).
